# EUROPEAN PATENT APPLICATION

(11) **EP 2 108 428 A2**
(43) Date of publication of application: **14.10.2009**
(21) Application number: 09155267.9
(22) Date of filing: 16.03.2009
(51) Int. Cl.: B01D 35/20

(54) **Head for water filtering devices of the cleaning, self-cleaning and similar types**

(30) Priority: 28.03.2008 IT PD20080095
(71) Applicant: Acqua Brevetti 95 S.R.L., 35030 Rubano, Frazione Sarmeola (PD) (IT)
(72) Inventor: Barbieri, Graziano, 35035, MESTRINO PD (IT)
(74) Representative: Modiano, Micaela Nadia

(57) **Abstract**

A head (10) for water filtering devices (11) of the cleaning, self-cleaning and similar types being constituted by a cup-shaped body (12) made of brass, provided with a ring (13) for screwing to a vessel (14) that supports a cartridge (14a), with an intake port (15) and a discharge port (16) for the water, and by an insert (17) made of plastics, which is designed to be forced within the cup-shaped body (12) and is contoured to redirect the water flows that enter the cartridge supporting vessel and exit from the vessel.

## Description

The present invention relates to a head for water filtering devices of the cleaning, self-cleaning and similar types.

Water filtering devices, both of the cleaning type and of the self-cleaning type, and both for purely mechanical filtering and for mixed, i.e., chemical and mechanical filtering, and the like, are currently known.

These water filtering devices are applied increasingly both at the domestic level and at the industrial level in order to have available water that is as much as possible pure and potable for any use.

These known devices are constituted generally by a brass head, which is fixed to a vessel with a filtering cartridge, such vessel having a discharge cock on the bottom.

The most expensive part of these filters is the head, which is indeed made of metallic material, generally brass, either by shell casting or by hot pressing.

Such head comprises an internally contoured body provided with a ring for screwing onto a cartridge supporting vessel; the internally contoured body in turn comprises an intake port and a discharge port for the water, between which there is
- a portion for lateral redirection of the flow that enters from the intake port toward two lateral compartments connected to the annular cavity between the side wall of the vessel and the cartridge arranged coaxially therein,
- a central tubular portion for the rise of the flow, which is open onto the inside of the cartridge,
- a channel for connection between the central rising tubular portion and the water discharge port.

The brass head, in addition to having a complex internal shape, causes a substantial weight for the filter, where the trend of the market is to facilitate handling by an end user and to save on transport from the manufacturer to the retailer.

The aim of the present invention is to provide a head for water filtering devices of the cleaning, self-cleaning and similar types, capable of obviating the above-mentioned drawbacks of known types of filter heads.

Within this aim, an object of the present invention is to provide a head for water filtering devices of the cleaning, self-cleaning and similar types that is lighter and whose performance is not inferior to that of the heads of known filters.

Another object of the present invention is to provide a head that is simple and can be provided at low costs.

Another object of the present invention is to provide a head for water filtering devices of the cleaning, self-cleaning and similar types that can be manufactured with known systems and technologies.

This aim and these and other objects, which will become better apparent hereinafter, are achieved by a head for water filtering devices of the cleaning, self-cleaning and similar types, **characterized in that** it is constituted by
- a cup-shaped body provided with a ring for screwing to a cartridge supporting vessel, said cup-shaped body comprising an intake port and a discharge port for the water,
- an insert made of plastics, which is designed to be accommodated within said cup-shaped body and is contoured to form a portion for redirection of the flow that enters from the intake port toward two lateral compartments, formed between the insert and the cup-shaped body, connected to the annular cavity between the side wall of the vessel and the cartridge arranged coaxially therein, a central tubular portion for the rise of the flow, which is open onto the inside of the cartridge, and a channel for connection between the central tubular rising portion and the water discharge port.

Further characteristics and advantages of the invention will become better apparent from the following detailed description of a preferred but not exclusive embodiment thereof, illustrated by way of non-limiting example in the accompanying drawings, wherein:
Figure 1 is a schematic side view of a water filter;
Figure 2 is a perspective view of a head according to the invention;
Figure 3 is an exploded perspective view of the head according to the invention;
Figure 4 is a perspective view of an insert of the head according to the invention;
Figure 5 is a front view of the head according to the invention;
Figure 6 is a side view, taken along the sectional line VI-VI of Figure 5.

With reference to the figures, a head for water filtering devices of the cleaning, self-cleaning and similar types, according to the invention, is generally designated by the reference numeral 10.

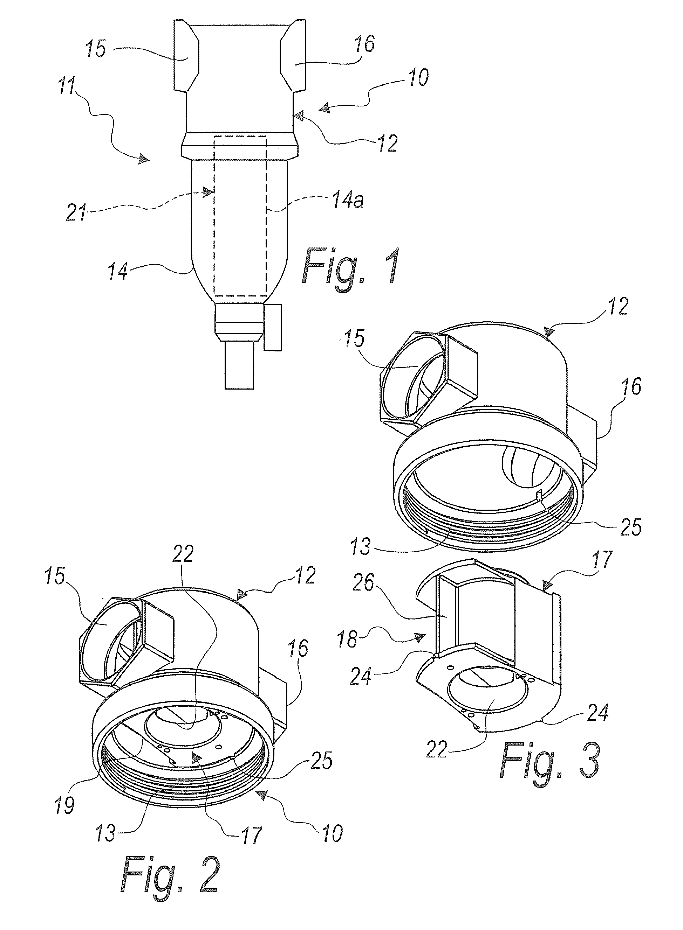

The head 10 is shown schematically in Figure 1 as part of a generic filter 11.

The head 10 is constituted by
- a cup-shaped body 12, which is provided with a ring 13 for screwing to a vessel 14 that supports internally a cartridge 14a; the cup-shaped body 12 comprises an intake port 15 and a discharge port 16 for the water;
- an insert 17 made of plastics, which is designed to be accommodated within the cup-shaped body 12.

The insert 17 is contoured to form a portion 18 for redirecting the flow that enters through the intake port 15 toward two lateral compartments 19, one of which is visible in the perspective view of Figure 2; such two compartments 19 are provided between the insert 17 and the cup-shaped body 12 and are open and connected to an annular cavity 21 between the side wall of the vessel 14 and the cartridge 14a arranged coaxially therein and shown schematically in Figure 1.

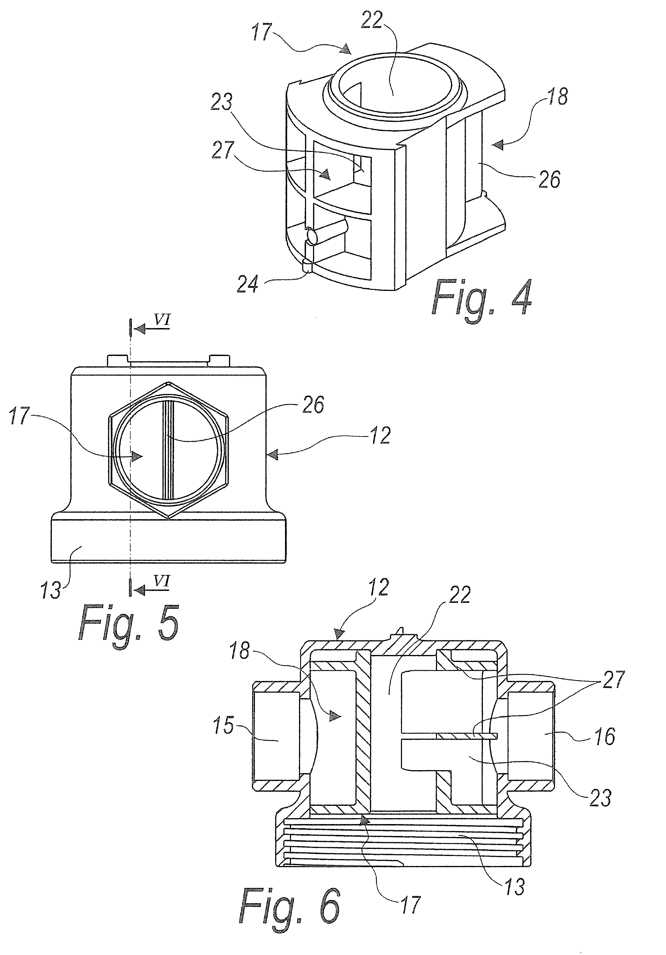

The insert 17 is further contoured to form a central tubular portion 22 for the rise of the flow, which is open onto the inside of the cartridge 14a, and also an exit channel 23 for connection between the central tubular rising portion 22 and the discharge port 16 for the water, as shown in the sectional view of Figure 6.

The insert 17 is a monolithic body obtained by molding plastics and is forced within the cup-shaped body 12.

The cup-shaped body 12 is preferably made of brass.

The insert 17, in order to facilitate assembly to the cup-shaped body 12, is provided with two centering and rotation-preventing protrusions 24, each of which is designed to enter a corresponding recess 25 formed on the internal surface of the cup-shaped body 12.

The redirection portion 18 comprises a central redirection partition 26, which is designed to split the incoming flow into two lateral flows.

The exit channel 23 is provided with a flow diffusion grille 27.

In practice it has been found that the invention thus described solves the proposed aim and objects.

In particular, the present invention provides a head for water filtering devices of the cleaning, self-cleaning and similar types that is lighter and whose performance is not inferior to that of the heads of known filters thanks to the insert made of plastics.

By way of the insert 17, which can be provided cheaply by molding plastics, the head 10 is lighter and easier to handle and at the same time less onerous, since the provision of the mold of the cup-shaped body 12 also is certainly less complicated than the provision of the complex mold for providing solid heads of the known type.

The saving in metallic material is added to all this.

Moreover, the present invention achieves a further important object, which is to provide a head that is simple and cheap to provide.

Moreover, the present invention provides a head for water filtering devices of the cleaning, self-cleaning and similar type.

The invention thus conceived is susceptible of numerous modifications and variations, all of which are within the scope of the appended claims; all the details may further be replaced with other technically equivalent elements.

In practice, the materials used, so long as they are compatible with the specific use, as well as the dimensions, may be any according to requirements and to the state of the art.

The disclosures in Italian Patent Application No. PD2008A000095 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A head (10) for water filtering devices (11) of the cleaning, self-cleaning and similar types, **characterized in that** it is constituted by
- a cup-shaped body (12) provided with a ring (13) for screwing to a vessel (14) that supports a cartridge (14a), said cup-shaped body (12) comprising an intake port (15) and a discharge port (16) for the water,
- an insert (17) made of plastics, which is designed to be accommodated within said cup-shaped body (12) and is contoured to form a portion (18) for redirection of the flow that enters from the intake port (15) toward two lateral compartments (19), formed between the insert (17) and the cup-shaped body (12), connected to an annular cavity (21) between the side wall of the vessel (14) and the cartridge (14a) arranged coaxially therein, a central tubular portion (22) for the rise of the flow, which is open onto the inside of the cartridge (14a), and an exit channel (23) for connection between the central tubular rising portion (22) and the water discharge port (16).

2. The head according to claim 1, **characterized in that** said insert (17) is a single body obtained by molding plastics and is forced inside said cup-shaped body (12).

3. The head according to the preceding claims, **characterized in that** said cup-shaped body (12) is made of brass.

4. The head according to the preceding claims, **characterized in that** said insert (17) has at least one centering and rotation-preventing protrusion (24), which is designed to enter a corresponding recess (25) that is formed on the internal surface of said cup-shaped body (12).

5. The head according to the preceding claims, **characterized in that** said redirection portion (18) comprises a central redirection partition (26), which is designed to split the incoming flow into two lateral flows.

6. The head according to the preceding claims, **characterized in that** said exit channel (23) is provided with a flow diffusion grille (27).
